(19) Europäisches Patentamt
European Patent Office
Office européen des brevets

(11) **EP 4 529 017 A1**

(12) **EUROPEAN PATENT APPLICATION**

(43) Date of publication:
**26.03.2025 Bulletin 2025/13**

(21) Application number: **24194925.4**

(22) Date of filing: **16.08.2024**

(51) International Patent Classification (IPC):
**H02P 25/22** (2006.01)   **H02P 29/028** (2016.01)

(52) Cooperative Patent Classification (CPC):
**H02P 25/22; H02P 29/028;** H02P 6/182

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **25.09.2023 IN 202311064263**

(71) Applicants:
• **General Electric Company**
  **Cincinnati, Ohio 45215 (US)**

• **General Electric Deutschland Holding GmbH**
  **60313 Frankfurt (DE)**

(72) Inventors:
• **CHAUDHARI, Pushkar Chandrakant**
  **560066 Bengaluru (IN)**
• **OSAMA, Mohamed**
  **85748 Garching (DE)**

(74) Representative: **Openshaw & Co.**
  **8 Castle Street**
  **Farnham, Surrey GU9 7HR (GB)**

(54) **ELECTRIC MACHINE ASSEMBLY AND METHOD OF OPERATING THE SAME**

(57)    A method (500, 600) for operating an electric machine assembly is provided, the electric machine assembly having an electric machine (402) comprising a first set of windings (438) and a second set of windings (440), the method (500, 600) comprising: (502) operating the electric machine (402) in a partial phase mode, wherein operating the electric machine (402) in the partial phase mode comprises: (504) powering a first set of windings (438) to provide a net zero current in the first set of windings (438) while maintaining one phase of the first set of windings (438) in a non-conducting condition; and (506) powering a second set of windings (440) to provide a net zero current in the second set of windings (440) while maintaining one phase of the second set of windings (440) in a non-conducting condition.

FIG. 6

EP 4 529 017 A1

# Description

## PRIORITY INFORMATION

The present application claims priority to Indian Provisional Patent Application Serial Number 202311064263 filed on September 25, 2023.

## FIELD

The present subject matter relates generally to electrical machine assemblies and methods of operating the same.

## BACKGROUND

A conventional commercial aircraft generally includes a fuselage, a pair of wings, and a propulsion system that provides thrust. The propulsion system typically includes at least two aircraft engines, such as turbofan jet engines. Each turbofan jet engine is typically mounted to a respective one of the wings of the aircraft, such as in a suspended position beneath the wing separated from the wing and fuselage.

Hybrid-electric propulsion systems are being developed to improve an efficiency of conventional commercial aircraft. Some hybrid electric propulsion systems include one or more electric machines each being mechanically coupled with a rotating component of one of the aircraft engines. The electric machines can each have an associated power converter electrically connected thereto. The inventors of the present disclosure have developed various systems and methods to improve hybrid electric propulsion systems, and more generally, power systems.

## BRIEF DESCRIPTION OF THE DRAWINGS

A full and enabling disclosure of the present disclosure, including the best mode thereof, directed to one of ordinary skill in the art, is set forth in the specification, which makes reference to the appended figures, in which:

FIG. 1 provides a schematic top view of an aircraft having a hybrid-electric propulsion system according to various exemplary embodiments of the present disclosure.

FIG. 2 provides a schematic cross-sectional view of one of the hybrid-electric propulsors of the aircraft of FIG. 1.

FIG. 3 provides a schematic view of an electric machine assembly according to one example embodiment of the present disclosure.

FIG. 4 provides a schematic view of a first set of windings and a second set of windings of an electric machine of the exemplary electric machine assembly of FIG. 3.

FIG. 5 provides an exemplary graph depicting on a Y-axis a normalized current from each phase of a first set of windings and of a second set of windings over time on an X-axis, during a normal operating condition.

FIG. 6 provides an exemplary graph depicting on a Y-axis a normalized current from each phase of a first set of windings and of a second set of windings over time on an X-axis, during a reduced power operating mode according to a first spatial sequence.

FIG. 7 provides an exemplary graph depicting on a Y-axis a normalized current from each phase of a first set of windings and of a second set of windings over time on an X-axis, during a reduced power operating mode according to a second spatial sequence.

FIG. 8 provides a schematic view of an electric machine assembly according to another example embodiment of the present disclosure.

FIG. 9 provides a flow diagram of a processing module in accordance with an exemplary aspect of the present disclosure.

FIG. 10 provides a flow diagram of a method of operating an electric machine assembly in accordance with an exemplary aspect of the present disclosure.

FIG. 11 provides a flow diagram of a method of operating an electric machine assembly in accordance with another exemplary aspect of the present disclosure.

FIG. 12 provides a graph of a control scheme in accordance with an exemplary aspect of the present disclosure with torque in Newton-meters (Nm) on a Y-axis and time in seconds (s) on an X-axis.

FIG. 13 provides an example computing system according to example embodiments of the present disclosure.

## DETAILED DESCRIPTION

Reference will now be made in detail to present embodiments of the invention, one or more examples of which are illustrated in the accompanying drawings. The detailed description uses numerical and letter designations to refer to features in the drawings. Like or similar designations in the drawings and description have been used to refer to like or similar parts of the invention.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

As used herein, the terms "first", "second", and "third" may be used interchangeably to distinguish one component from another and are not intended to signify location or importance of the individual components.

The terms "forward" and "aft" refer to relative positions within a gas turbine engine or vehicle, and refer to the normal operational attitude of the gas turbine engine or vehicle. For example, with regard to a gas turbine engine, forward refers to a position closer to an engine inlet and aft refers to a position closer to an engine nozzle or exhaust.

The terms "upstream" and "downstream" refer to the relative direction with respect to a flow in a pathway. For example, with respect to a fluid flow, "upstream" refers to the direction from which the fluid flows, and "downstream" refers to the direction to which the fluid flows. However, the terms "upstream" and "downstream" as used herein may also refer to a flow of electricity.

The singular forms "a", "an", and "the" include plural references unless the context clearly dictates otherwise.

Here and throughout the specification and claims, range limitations are combined and interchanged, such ranges are identified and include all the sub-ranges contained therein unless context or language indicates otherwise. For example, all ranges disclosed herein are inclusive of the endpoints, and the endpoints are independently combinable with each other.

Modern aeronautical gas turbine engines are constantly seeking advancements to enhance efficiency, safety, and reliability. One of the prevailing challenges faced in the design of electric machine assemblies that may be incorporated into aeronautical gas turbine engines is their overall size and weight. A bulkier design not only affects the efficiency and fuel consumption of the aviation system but also limits the available space for other crucial components.

In addition to the above challenges, another issue is that if an electric machine of the electric machine assembly experiences a phase failure, the entire set of windings including such phase may need to be shut down. Accordingly, when a phase in an existing electric machine fails, it can lead to undesirable results.

Therefore, there is a need for an improved electric machine assembly, and/or a method of operating an electric machine assembly that provides built-in redundancy and/or allows for a lighter and more compact system.

The inventors of the present disclosure have discovered in one aspect an improved electric machine assembly and method for operating the same that allows for operating the electric machine assembly in a partial phase mode, e.g., in the event of a failure in a phase of a set of windings of the electric machine. In particular, the method includes powering a first set of windings to provide a net zero current in the first set of windings while maintaining one phase of the first set of windings in a non-conducting condition; and powering a second set of windings to provide a net zero current in the second set of windings while maintaining one phase of the second set of windings in a non-conducting condition. The current in the second set of windings may be 60 degrees offset from the current in the first set of windings. In such a manner, the electric machine may generate a torque without requiring a neutral or ground wire, despite two phases being in a non-conducting condition.

The inventors of the present disclosure have discovered in another aspect a method for determining a position of a rotor without use of a dedicated resolver and/or encoder attached to a rotor driving the electric machine. The method includes receiving data indicative of a first back EMF signal from the one phase of the first set of windings; receiving data indicative of a second back EMF signal from the one phase of the second set of windings; and determining data indicative of a position of a rotor of the electric machine based on the data indicative of the first back EMF signal and based on the data indicative of a second back EMF signal. The determining step may be accomplished using a processing module. Notably, the phase of the first set of windings may be in a non-conducting condition, and the phase of the second set of windings may also be in a non-conducting condition. Such a method (optionally used in conjunction with the above aspect of the present disclosure) may effectively determine a position of the rotor of the electric machine to allow for more efficient operation of the electric machine.

Through this method, individual sets of windings are powered in a manner that ensures a net zero current, even while keeping one of their phases in a non-conducting state. This not only allows for a more compact design and reduced weight but also establishes an inherent redundancy. Moreover, by harnessing the back EMF signals derived from these windings, the disclosure offers a sophisticated mechanism to determine the rotor's position. Thus, in embodiments, this methods described herein may not only streamline the machine's operation but also greatly enhances its reliability in various operational scenarios.

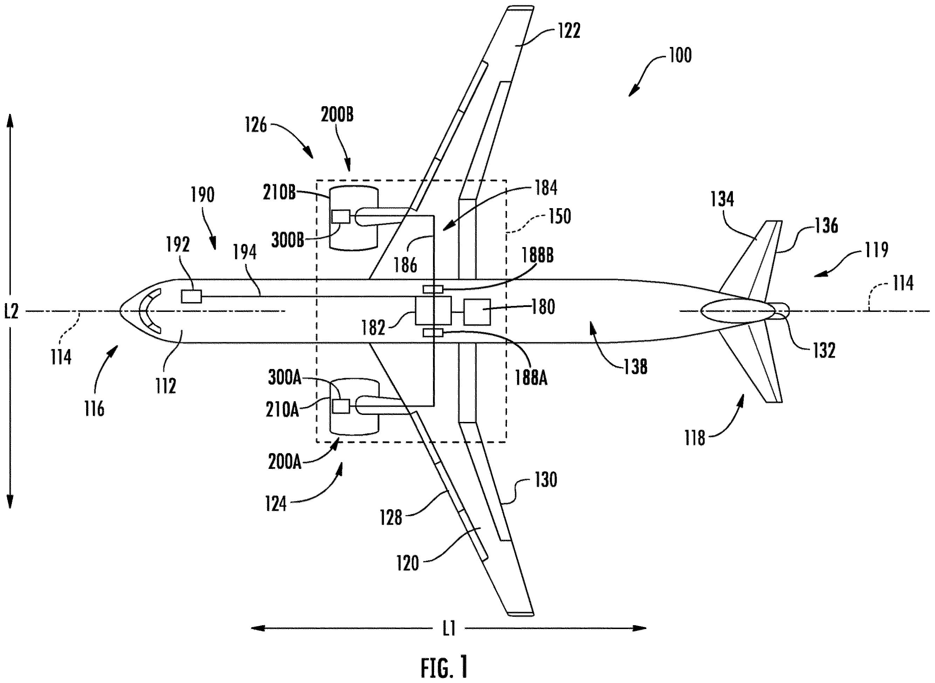

FIG. 1 provides a schematic top view of an exemplary aircraft 100 as may incorporate one or more inventive aspects of the present disclosure. As shown in FIG. 1, for reference, the aircraft 100 defines a longitudinal direction L1 and a lateral direction L2. The lateral direction L2 is perpendicular to the longitudinal direction L1. The aircraft 100 also defines a longitudinal centerline 114 that extends therethrough along the longitudinal direction L1. The aircraft 100 extends between a forward end 116 and an aft end 118, e.g., along the longitudinal direction L1.

As depicted, the aircraft 100 includes a fuselage 112 that extends longitudinally from the forward end 116 of the aircraft 100 to the aft end 118 of the aircraft 100. The aircraft 100 also includes an empennage 119 at the aft end 118 of the aircraft 100. In addition, the aircraft 100 includes a wing assembly including a first, port side wing 120 and a second, starboard side wing 122. The first and second wings 120, 122 each extend laterally outward with respect to the longitudinal centerline 114. The first wing 120 and a portion of the fuselage 112 together define a first side 124 of the aircraft 100 and the second wing 122 and another portion of the fuselage 112 together define a second side 126 of the aircraft 100. For the embodiment depicted, the first side 124 of the aircraft 100 is configured as the port side of the aircraft 100 and the second side 126 of the aircraft 100 is configured as the starboard side of the aircraft 100.

The aircraft 100 includes various control surfaces. For this embodiment, each wing 120, 122 includes one or more leading edge flaps 128 and one or more trailing edge flaps 130. The aircraft 100 further includes, or more specifically, the empennage 119 of the aircraft 100 includes a vertical stabilizer 132 having a rudder flap (not shown) for yaw control and a pair of horizontal stabilizers 134 each having an elevator flap 136 for pitch control. The fuselage 112 additionally includes an outer surface or skin 138. It should be appreciated that in other exemplary embodiments of the present disclosure, the aircraft 100 may additionally or alternatively include any other suitable configuration. For example, in other embodiments, the aircraft 100 may include any other control surface configuration.

The exemplary aircraft 100 of FIG. 1 also includes a hybrid-electric propulsion system 150. For this embodiment, the hybrid-electric propulsion system 150 has a first propulsor 200A and a second propulsor 200B both operable to produce thrust. The first propulsor 200A is mounted to the first wing 120 and the second propulsor 200B is mounted to the second wing 122. Moreover, for the embodiment depicted, the first propulsor 200A and second propulsor 200B are each configured in an underwing-mounted configuration. However, in other example embodiments, one or both of the first and second propulsors 200A, 200B may be mounted at any other suitable location in other exemplary embodiments.

The first propulsor 200A includes a gas turbine engine 210A and one or more electric machines, such as electric machine 300A mechanically coupled with the gas turbine engine 210A. The electric machine 300A can be an electric generator, an electric motor, or a combination generator/motor. For this example embodiment, the electric machine 300A is a combination generator/motor. In this manner, when operating as an electric generator, the electric machine 300A can generate electrical power when driven by the gas turbine engine 210A. When operating as an electric motor, the electric machine 300A can drive or motor the gas turbine engine 210A.

Likewise, the second propulsor 200B includes a gas turbine engine 210B and one or more electric machines, such as electric machine 300B mechanically coupled with the gas turbine engine 210B. The electric machine 300B can be an electric generator, an electric motor, or a combination generator/motor. For this example embodiment, the electric machine 300B is a combination generator/motor. In this manner, when operating as an electric generator, the electric machine 300B can generate electrical power when driven by the gas turbine engine 210B. When operating as an electric motor, the electric machine 300B can drive or motor a spool of the gas turbine engine 210B. Electric machine 300B can be configured and can operate in a similar manner as electric machine 300A described herein.

The hybrid-electric propulsion system 150 further includes an electric energy storage unit 180 electrically connectable to the electric machines 300A, 300B, and in some embodiments, other electrical loads. In some exemplary embodiments, the electric energy storage unit 180 may include one or more batteries. Additionally, or alternatively, the electric energy storage units 180 may include one or more supercapacitor arrays, one or more ultracapacitor arrays, or both. For the hybrid-electric propulsion system 150 described herein, the electric energy storage unit 180 is configured to store a relatively large amount of electrical power. For example, in certain exemplary embodiments, the electric energy storage unit 180 may be configured to store at least about fifty kilowatt hours of electrical power, such as at least about sixty-five kilowatt hours of electrical power, such as at least about seventy-five kilowatt hours of electrical power, and up to about one thousand kilowatt hours of electrical power.

The hybrid-electric propulsion system 150 also includes a power management system having a controller 182 and a power bus 184. The electric machines 300A, 300B, the electric energy storage unit 180, and the controller 182 are each electrically connectable to one another through one or more electric lines 186 of the power bus 184. For instance, the power bus 184 may include various switches or other power electronics movable to selectively electrically connect the various components of the hybrid-electric propulsion system 150. Particularly, as shown in FIG. 1, a first power converter 188A of the power bus 184 is electrically coupled or connectable with the electric machine 300A via one or more electric lines 186 and a second power converter 188B of the power bus 184 is electrically coupled or connectable with the electric machine 300B via one or more electric lines 186. The power bus 184 may include other power electronics, such as inverters, converters, rectifiers, etc., for conditioning or converting electrical power within the hybrid-electric propulsion system 150.

The controller 182 is configured to control the power electronics to distribute electrical power between the various components of the hybrid-electric propulsion system 150. For example, the controller 182 may control the power electronics of the power bus 184 to provide electrical power to, or draw electrical power from, the various components, such as the electric machines 300A, 300B, to operate the hybrid-electric propulsion system 150 between various operating modes and perform various functions. Such is depicted schematically as the electric lines 186 of the power bus 184 extend through the controller 182.

The controller 182 can form a part of a computing system 190 of the aircraft 100. The computing system 190 of the aircraft 100 can include one or more processors and one or more memory devices embodied in one or more computing devices. For instance, as depicted in FIG. 1, the computing system 190 includes controller 182 as well as other computing devices, such as computing device 192. The computing system 190 can include other computing devices as well, such as engine controllers (not shown). The computing devices of the computing system 190 can be communicatively coupled with one another via a communication network. For instance, computing device 192 is located in the cockpit of the aircraft 100 and is communicatively coupled with the controller 182 of the hybrid-electric propulsion system 150 via a communication link 194 of the communication network. The communication link 194 can include one or more wired or wireless communication links.

For this embodiment, the computing device 192 is configured to receive and process inputs, e.g., from a pilot or other crew members, and/or other information. In this manner, as one example, the one or more processors of the computing device 192 can receive an input indicating a command to change a thrust output of the first and/or second propulsors 200A, 200B and can cause, in response to the input, the controller 182 to control the electrical power drawn from or delivered to one or both of the electric machines 300A, 300B to ultimately change the thrust output of one or both of the propulsors 200A, 200B.

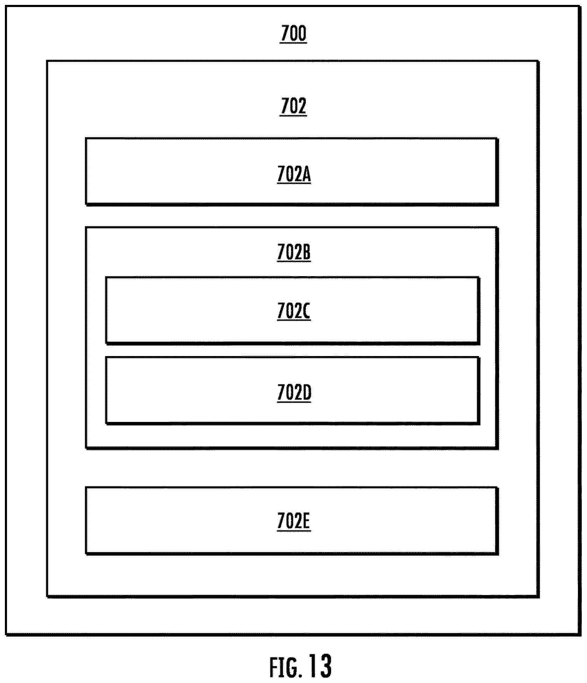

The controller 182 and other computing devices of the computing system 190 of the aircraft 100 may be configured in substantially the same manner as the exemplary computing devices of the computing system 700 described below with reference to FIG. 13.

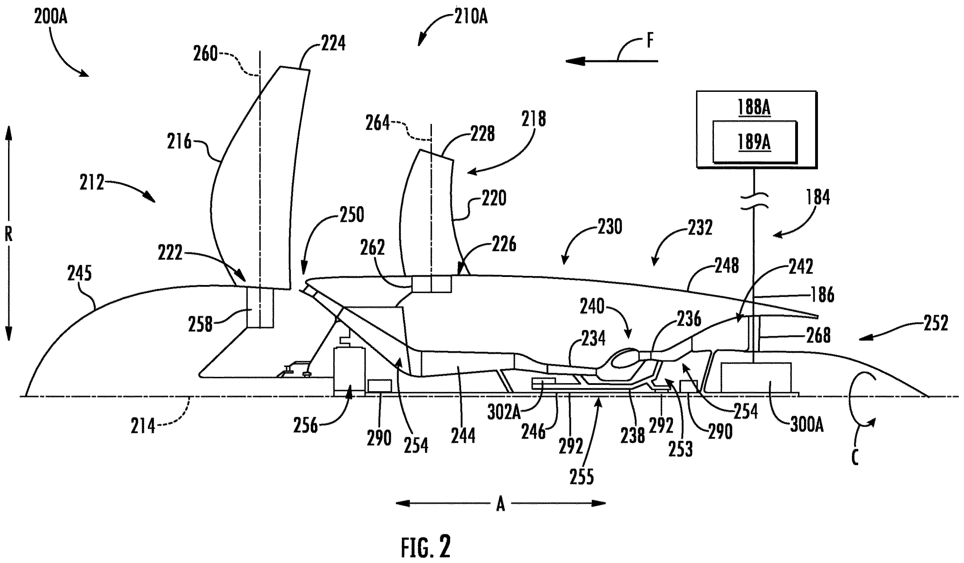

FIG. 2 provides a schematic view of the first propulsor 200A of the hybrid-electric propulsion system 150 of the aircraft 100 of FIG. 1. Although the first propulsor 200A is shown, it will be appreciated that the second propulsor 200B can be configured in the same or similar manner as the first propulsor 200A depicted in FIG. 2. The exemplary gas turbine engine of FIG. 2 is configured as a single unducted rotor engine 210A defining an axial direction A, a radial direction R, and a circumferential direction C. The engine 210A also defines a central longitudinal axis 214.

As shown in FIG. 2, the engine 210A takes the form of an open rotor propulsion system and has a rotor assembly 212 that includes an array of airfoils arranged around the central longitudinal axis 214 of engine 210A. More particularly, the rotor assembly 212 includes an array of rotor blades 216 arranged around the central longitudinal axis 214 of the engine 210A. Moreover, as will be explained in more detail below, the engine 210A also includes a non-rotating vane assembly 218 positioned aft of the rotor assembly 212 (i.e., non-rotating with respect to the central axis 214). The non-rotating vane assembly 218 includes an array of airfoils also disposed around central axis 214. More specifically, the vane assembly 218 includes an array of vanes 220 disposed around central longitudinal axis 214.

The rotor blades 216 are arranged in typically equally-spaced relation around the central longitudinal axis 214, and each blade has a root 222 and a tip 224 and a span defined therebetween. Similarly, the vanes 220 are also arranged in typically equally-spaced relation around the central longitudinal axis 214, and each has a root 226 and a tip 228 and a span defined therebetween. The rotor assembly 212 further includes a hub 245 located forward of the plurality of rotor blades 216.

Additionally, the engine 210A includes a turbomachine 230 having a core 232 (or high pressure/ high speed system) and a low pressure/ low speed system. It will be appreciated that as used herein, the terms "speed" and "pressure" are used with respect to the high pressure/high speed system and low pressure/low speed system interchangeably. Further, it will be appreciated that the terms "high" and "low" are used in this same context to distinguish the two systems, and are not meant to imply any absolute speed and/or pressure values.

The core 232 generally includes a high speed compressor 234, a high speed turbine 236, and a high speed shaft 238 extending therebetween and connecting the high speed compressor 234 and high speed turbine 236. The high speed compressor 234, the high speed turbine 236, and the high speed shaft 238 may collectively be referred to as a high speed spool 253 of the engine. Further, a combustion section 240 is located between the high speed compressor 234 and high speed turbine 236. The combustion section 240 may include one or more configurations for receiving a mixture of fuel and air, and providing a flow of combustion gasses through the high speed turbine 236 for driving the high speed spool 253.

The low speed system includes a low speed turbine 242, a low speed compressor 244 or booster, and a low speed shaft 246 extending between and connecting the low speed compressor 244 and low speed turbine 242. The low speed compressor 244, the low speed turbine 242, and the low speed shaft 246 may collectively be referred to as a low speed spool 255 of the engine.

Although the engine 210A is depicted with the low speed compressor 244 positioned forward of the high speed compressor 234, in certain embodiments the compressors 234, 244 may be in an interdigitated arrangement. Additionally, or alternatively, although the engine 210A is depicted with the high speed turbine 236 positioned forward of the low speed turbine 242, in certain embodiments the turbines 236, 242 may similarly be in an interdigitated arrangement.

In order to support the rotating components of the engine 210A, the engine 210A includes a plurality of bearings coupling the rotating components to various structural components. Specifically, as depicted in FIG. 2, bearings 290 support and facilitate rotation of the low speed shaft 246. Further, bearings 292 support and facilitate rotation of the high speed shaft 238. Although the bearings 290, 292 are illustrated as being located generally at forward and aft ends of their associated shafts 246, 238, the bearings 290, 292 may be located at any desired location along their associated shafts. Moreover, in some embodiments, one or more additional bearings other than the bearings 290 shown in FIG. 2 can be used to support the low speed shaft 246. For instance, in some embodiments, an additional bearing can be positioned at a central or mid-span region of the low speed shaft 246 provides support thereto. Similarly, one or more additional bearings other than the bearings 290 shown in FIG. 2 can be used to support the high-speed shaft 238. The bearings 290, 290 can be any suitable type of bearings, such as air bearings, oil-lubricated bearings, etc.

Referring still to FIG. 2, the turbomachine 230 is generally encased in a cowl 248. Moreover, it will be appreciated that the cowl 248 defines at least in part an inlet 250 and an exhaust 252, and includes a turbomachinery flowpath 254 extending between the inlet 250 and the exhaust 252. The inlet 250 is, for the embodiment shown, an annular or axisymmetric 360 degree inlet 250 located between the rotor assembly 212 and the fixed or stationary vane assembly 218 along the axial direction A, and provides a path for incoming atmospheric air to enter the turbomachinery flowpath 254 (and compressors 244, 234, combustion section 240, and turbines 236, 242) inwardly of the guide vanes 220 along the radial direction R. Such a location may be advantageous for a variety of reasons, including management of icing performance as well as protecting the inlet 250 from various objects and materials as may be encountered in operation. In other embodiments, however, the inlet 250 may be positioned at any other suitable location, e.g., aft of the vane assembly 218, arranged in a non-axisymmetric manner, etc.

As depicted, the rotor assembly 212 is driven by the turbomachine 230, and more specifically, the low speed spool 255 of the turbomachine 230. More specifically, for this embodiment, the engine 210A includes a power gearbox 256. The rotor assembly 212 is driven by the low speed spool 255 of the turbomachine 230 across the power gearbox 256. In such a manner, the rotating rotor blades 216 of the rotor assembly 212 may rotate around the central longitudinal axis 214 and generate thrust to propel engine 210A, and hence, the aircraft 100 (FIG. 1) to which it is associated, in a forward direction F. The power gearbox 256 can include a gearset for decreasing a rotational speed of the low speed spool 255 relative to the low speed turbine 242 such that the rotor assembly 212 may rotate at a slower rotational speed than the low speed spool 255.

As briefly noted above, the engine 210A includes vane assembly 218. The vane assembly 218 extends from the cowl 248 and is positioned aft of the rotor assembly 212. The vanes 220 of the vane assembly 218 may be mounted to a stationary frame or other mounting structure and do not rotate relative to the central longitudinal axis 214. For reference purposes, FIG. 2 depicts the forward direction with arrow F, which in turn defines the forward and aft portions of the engine 210A.

As shown in FIG. 2, the rotor assembly 212 is located forward of the turbomachine 230 in a "puller" configuration and the exhaust 252 is located aft of the guide vanes 220. The vanes 220 of the vane assembly 218 are aerodynamically contoured to straighten out an airflow (e.g., reducing a swirl in the airflow) from the rotor assembly 212 to increase an efficiency of the engine 210A. For example, the vanes 220 may be sized, shaped, and configured to impart a counteracting swirl to the airflow from the rotor blades 216 so that in a downstream direction aft of both rows of airfoils (e.g., blades 216, vanes 220) the airflow has a greatly reduced degree of swirl, which may translate to an increased level of induced efficiency.

In some embodiments, it may be desirable that the rotor blades 216, the vanes 220, or both, incorporate a pitch change mechanism such that the airfoils (e.g., blades 216, vanes 220, etc.) can be rotated with respect to an axis of pitch rotation either independently or in conjunction with one another. Such pitch change can be utilized to vary thrust and/or swirl effects under various operating conditions, including to adjust a magnitude or direction of thrust produced at the rotor blades 216, or to provide a thrust reversing feature which may be useful in certain operating conditions, such as upon landing an aircraft, or to desirably adjust acoustic noise produced at least in part by the rotor blades 216, the vanes 220, or aerodynamic interactions from the rotor blades 216 relative to the vanes 220. More specifically, for the embodiment of FIG. 2, the rotor assembly 212 is depicted with a pitch change mechanism 258 for rotating the rotor blades 216 about their respective pitch axes 260, and the vane assembly 218 is depicted with a pitch change mechanism 262 for rotating the vanes 220 about their respective pitch axes 264.

The exemplary single rotor unducted engine 210A depicted in FIG. 2 is provided by way of example only. Accordingly, it will be appreciated that the engine 210A may have other suitable configurations. For example, in other example embodiments, the engine 210A can have other suitable numbers of shafts or spools, turbines, compressors, etc.; fixed-pitch blades or vanes 216, 220, or both; a direct-drive configuration (i.e., may not include the gearbox 256); etc. For example, in other exemplary embodiments, the engine 210A may be a three-spool engine, having an intermediate speed compressor and/or turbine. In such a configuration, it will be appreciated that the terms "high" and "low," as used herein with respect to the speed and/or pressure of a turbine, compressor, or spool are terms of convenience to differentiate between the components, but do not require any specific relative speeds and/or pressures, and are not exclusive of additional compressors, turbines, and/or spools or shafts.

Additionally or alternatively, in other exemplary embodiments, any other suitable gas turbine engine may be provided. For example, in other exemplary embodiments, the gas turbine engine may be a turboshaft engine, a turboprop engine, turbojet engine, etc. Moreover, for example, although the engine is depicted as a single unducted rotor engine, in other embodiments, the engine may include a multistage open rotor configuration, and aspects of the disclosure described hereinbelow may be incorporated therein.

Further, in other exemplary embodiments, the engine 210A may be configured as a ducted turbofan engine. For example, in other exemplary embodiments, the engine may include a nacelle circumferentially surrounding at least in part the rotor assembly 212 and turbomachine 230, defining a bypass passage therebetween. With such a configuration, the vanes 220 of the vane assembly 218 may extend between and connect the nacelle with the cowl 248.

Referring still to FIG. 2, as noted, the first propulsor 200A includes electric machine 300A operably coupled with a rotating component thereof. In this regard, the first propulsor 200A is an aeronautical hybrid-electric propulsion machine. Particularly, as shown in FIG. 2, the electric machine 300A is mechanically coupled with the low speed spool 255 of the gas turbine engine 210A, and more particularly, the low speed shaft 246 of the low speed spool 255. As depicted, the electric machine 300A is embedded within the core of the gas turbine engine 210A. Specifically, the electric machine 300A is positioned inward of the turbomachinery flowpath 254 along the radial direction R. Moreover, for this embodiment, the electric machine 300A is positioned generally at the aft end of the gas turbine engine 210A and is at least partially overlapping with or aft of the low pressure turbine 242 along the axial direction A. However, in other exemplary embodiments, the electric machine 300A may be positioned at other suitable locations within the gas turbine engine 210A. For instance, in some embodiments, the electric machine 300A can be coupled with the low speed spool 255 in other suitable locations. For instance, in some embodiments, the electric machine 300A can be positioned forward of the low pressure compressor 244 along the axial direction A and inward of the turbomachinery flowpath 254 along the radial direction R. Further, as shown in FIG. 2, the electric machine 300A mechanically coupled with the low speed shaft 246 is electrically coupled with the power bus 184 and is electrically connected to its associated power converter supply 188A.

In addition or alternatively to the gas turbine engine 210A having electric machine 300A coupled to the low speed spool 255, in some embodiments, the gas turbine engine 210A can include an electric machine 302A mechanically coupled with the high speed spool 253 of the gas turbine engine 210A, and more particularly, the high speed shaft 238 of the high speed spool 253. As depicted in FIG. 2, the electric machine 302A is embedded within the core of the gas turbine engine 210A and is mechanically coupled with the high speed shaft 238. The electric machine 302A is positioned inward of the turbomachinery flowpath 254 along the radial direction R and is positioned forward of the combustion section 140 along the axial direction A. However, in other exemplary embodiments, the electric machine 302A may be positioned at other suitable locations within the gas turbine engine 210A. Although not shown, the electric machine 302A mechanically coupled with the high speed shaft 238 can be electrically coupled with the power bus 184 and can be electrically connected to its own power converter supply.

Like the electric machine 300A mechanically coupled with the low speed spool 255, the electric machine 302A mechanically coupled with the high speed spool 253 can be an electric motor operable to drive or motor the high speed shaft 238, e.g., during an engine burst. In other embodiments, the electric machine 302A can be an electric generator operable to convert mechanical energy into electrical energy. In this way, electrical power generated by the electric machine 302A can be directed to various engine and/or aircraft systems. In some embodiments, the electric machine 302A can be a motor/generator with dual functionality.

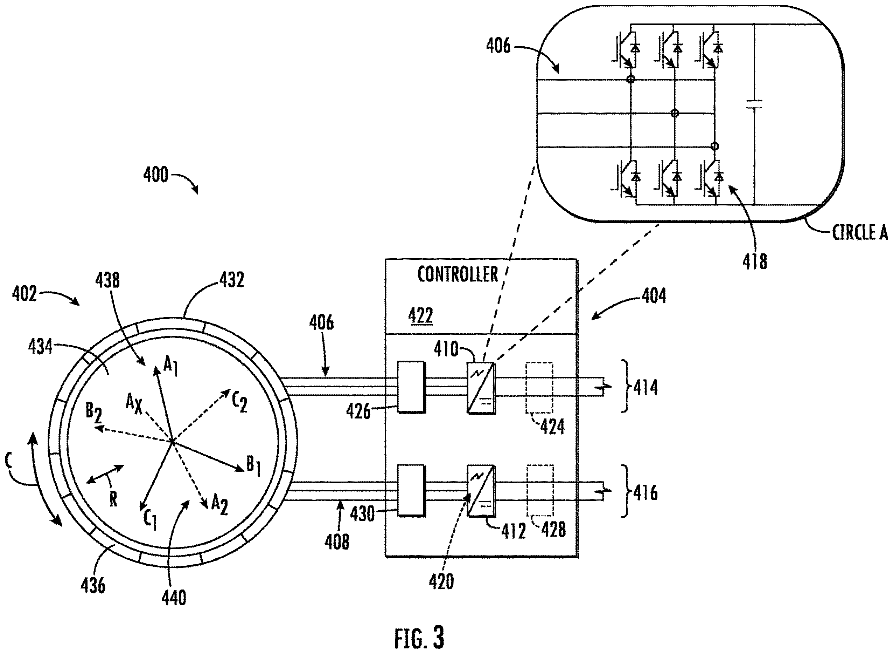

With reference now to FIG. 3, FIG. 3 provides a schematic view of an electric machine assembly 400 that includes an electric machine 402 according to one example embodiment of the present disclosure. Generally, the electric machine assembly 400 includes power converter system 404, the electric machine 402, and a plurality of electrical cables 406, 408 electrically coupling the power converter system 404 and the electric machine 402. The electric cables 406, 408 can be shielded cables, for example.

For this embodiment, the power converter system 404 is an AC/DC power converter system. For the depicted embodiment, the power converter system 404 has a first power converter unit 410 and a second power converter unit 412. The power converter units 410, 412 can be separate or independent units, or alternatively, can be units of a single power converter. The first power converter unit 410 is associated with a first channel 414 and the second power converter unit 412 is associated with a second channel 416. In FIG. 3, the first channel 414 is a DC output channel, and likewise, the second channel 416 is a DC output channel.

The first power converter unit 410 includes first switching elements 418 (see callout Circle A in FIG. 3 with the first switching elements 418 depicted schematically) and the second power converter unit 412 includes second switching elements 420 (not shown, pointed to in phantom, but may be arranged in substantially the same manner as the first switching elements 418). The first switching elements 418 correspond to all switching elements of the first power converter unit 410 and the second switching elements 420 correspond to all switching elements of the second power converter unit 412. The first and second switching elements 418, 420 can be any suitable type of switching elements, such as insulated gate bipolar transistors, power MOSFETs, etc. Further, although not depicted, the first and second switching elements 418, 420 can each include switching elements for each phase of power of the electric machine assembly 400.

By turning on or off the switching devices or elements of the first switching elements 418, the AC phase terminal can be connected to one of the multiple DC bus rails. Similarly, turning on or off the switching devices or elements of the second switching elements 420 can similarly connect the AC phase terminal of the power converter unit 428 to one of the multiple DC bus rails in a similar manner as described above with respect to the switching action of the first switching elements 418. In certain exemplary aspects, the electric machine assembly 400 can be grounded (not shown) by connecting one of the DC bus rails to a ground reference, which is typically a conductive frame of the electric machine assembly 400. However, as will be appreciated from the description herein, in at least certain exemplary aspects, the electric machine assembly 400 may not include ground or neutral wiring.

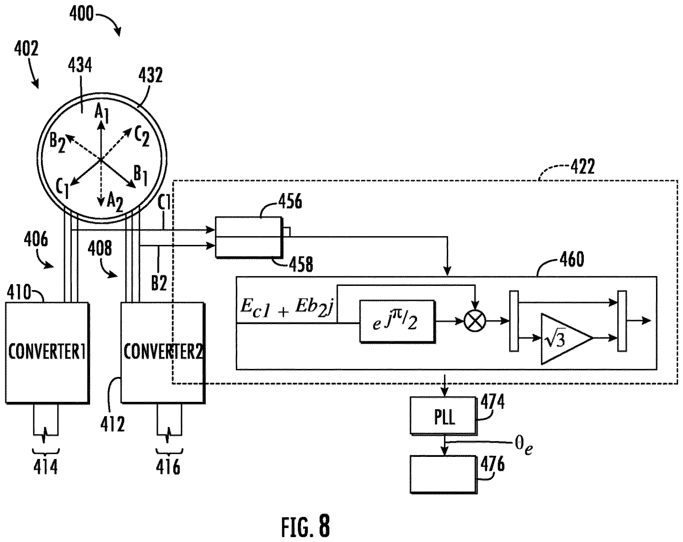

The power converter system 404 can also include one or more processors and one or more memory devices. The one or more processors and one or more memory devices can be embodied in one or more controllers or computing devices. For instance, for this embodiment, the one or more processors and one or more memory devices are embodied in a controller 422. The controller 422 can be communicatively coupled with various devices, such as the first and second switching elements 418, 420 (e.g., through one or more integrated gate drivers (not shown)), one or more sensors (see, e.g., embodiment of FIG. 8, discussed below), as well as other computing devices. The controller 422 can be communicatively coupled with such devices via a suitable wired and/or wireless connection. Generally, the controller 422 can be configured in the manner illustrated in FIG. 13 and described in the accompanying text.

In alternative embodiments, the one or more processors and one or more memory devices can be embodied in a plurality of controllers. For instance, in some embodiments, each of the first and second power converter unit 410, 412 can have an associated controller for controlling the switching action of their respective switching elements 418, 420. In yet other embodiments, the first and second power converter units 410, 412 can have a dedicated controller for controlling the switching action of the first and second switching elements 418, 420.

Furthermore, the power converter system 404 can include one or more electromagnetic interference filters, or EMI filters. For this embodiment, the power converter system 404 may include a first DC-side EMI filter 424 (shown in phantom) and a first AC-side EMI filter 426 associated with the first channel 414. The power converter system 404 may also include a second DC-side EMI filter 428 (shown in phantom) and a second AC-side EMI filter 430 associated with the second channel 416. Generally, the EMI filters 424, 426, 428, 430 can suppress electromagnetic noise transmitted along their respective channels 401, 402.

In alternative embodiments, the first channel 414 of the power converter system 404 can include an EMI filter only on the AC side, only on the DC side, or need not include an EMI filter on either the AC or DC side. Additionally or alternatively, the second channel 416 of the power converter system 404 can include an EMI filter only on the AC side, only on the DC side, or need not include an EMI filter on either the AC or DC side.

The electric machine 402 defines an axial direction (a direction into and out of the page in FIG. 3), a radial direction R, and a circumferential direction C. The electric machine 402 also defines an axis of rotation AX extending along the axial direction. Further, as shown, the electric machine 402 has a rotor 432 and a stator 434. The rotor 432 can be mechanically coupled with a rotating component, such as a rotating component of a gas turbine engine. The rotor 432 is rotatable about the axis of rotation AX. The rotor 432 is depicted outward of the stator 434 along the radial direction R, and thus, the electric machine 402 is configured in an outer-rotor configuration. However, the inventive aspects of the present disclosure also apply to electric machines having an inner-rotor configuration.

The rotor 432 includes a plurality of magnets 436. In such a manner, it will be appreciated that the electric machine 402 is configured as a permanent magnet electric machine. Notably, however, in other embodiments, the electric machine 402 may be any suitable type of synchronous electric machine.

The stator 434 includes a plurality of multiphase windings or coils wound therein, e.g., within slots defined between teeth of the stator 434. For the embodiment depicted, the stator 434 includes a first multiphase winding, referred to herein as a first set of windings 438, and a second multiphase winding, referred to herein as a second set of windings 440 (shown in dotted lines to differentiate from the first set of windings 438). The first set of windings 438 and the second set of windings 440 are each configured as a set of three phase windings.

The first set of windings 438 and the second set of windings 440 can each include windings or coils for various power phases. For instance, the first set of windings 438 includes windings for a first phase A1, a second phase B1, and a third phase C1 associated with the first set of windings 438. The second set of windings 440 similarly includes windings for a first phase A2, a second phase B2, and a third phase C3 associated with the second set of windings 440. In such a manner, it will be appreciated that the first set of windings 438 includes phases A1, B1, and C1, and the second set of windings 440 includes phases A2, B2, and C2.

As depicted in FIG. 3, the first set of windings 438 is electrically coupled with the first switching elements 418 of the first power converter unit 410 and is associated with the first channel 414 and the second set of windings 440 is electrically coupled with the second switching elements 420 of the second power converter unit 412 and is associated with the second channel 416.

During a normal operating condition of the electric machine 402 (e.g., an operating condition absent of any faults in the first set of windings 438 and in the second set of windings 440), the electric machine 402 may employ an excitation strategy that operates the second set of windings 440 180 degrees out of phase with the first set of windings 438. In particular, during the normal operating condition, a spatial sequence of the first and second sets of windings 438, 440 may be defined by the winding functions of each of the two sets of three phase windings as described below.

For the first set of windings 438 during the normal operating condition, the fundamental components of the winding functions may be:

$$Na_1(\theta_e) = N_1 \cos (\theta_e);$$

$$Nb_1(\theta_e) = N_1 \cos (\theta_e - 2\pi/3);$$

$$Nc_1(\theta_e) = N_1 \cos (\theta_e - 4\pi/3);$$

wherein, $N_1$ is a peak winding function of first set of windings 438 [turns]; and
wherein, $\theta_e$ is the spatial electrical angle for the first set of windings 438 with a number of poles p1 around a periphery of the electric machine 402 [in the units of radians].

Moreover, the currents flowing in those first set of windings 438 when operated according to the above spatial sequence, may be defined as:

$$ia_1(t) = Ipk_1 \cos (\omega_e t);$$

$$ib_1(t) = Ipk_1 \cos (\omega_e t - 2\pi/3);$$

$$ic_1(t) = Ipk_1 \cos (\omega_e t - 4\pi/3);$$

wherein, $Ipk_1$ is a peak (magnitude) of current flowing in first set of windings 438 [in the units of Amps];
wherein, $\omega_e$ is the angular frequency of the first current set [in the units of radians/second]; and
wherein, t: time [in the units of seconds].

Further, for the second set of windings 440, the spatial sequence of the windings during the normal operating condition may be 180 degrees out of phase of the first set of windings 438, such that the fundamental components of the winding functions may be:

$$Na_2(\theta_e) = -N_2 \cos (\theta_e);$$

$$Nb_2(\theta_e) = -N_2 \cos (\theta_e - 2\pi/3);$$

$$Nc_2(\theta_e) = -N_2 \cos (\theta_e - 4\pi/3);$$

wherein, $N_2$ is a peak winding function of the second set of windings 440 [turns]; and
wherein, $\theta_e$ is the spatial electrical angle for the second set of windings 440 with the number of poles p2 around the periphery of the electric machine 402 [radians]. Notably, the number of poles p2 is equal to the number of poles p1, such that $\theta_e$ is constant for the winding functions of the first and second sets of windings 438, 440.

From the trigonometric definitions, note the spatial sequence of $Na_2$, $Nb_2$ and $Nc_2$ is the inverse of $Na_1$, $Nb_1$ and $Nc_1$ (180 degrees out of phase). In addition, there may be an opposite spatial sequence for the currents flowing in the second set of windings 440, and hence those fundamental components of currents may be defined as:

$$ia_2(t) = -Ipk_2 \cos (\omega_e t);$$

$$ib_2(t) = -Ipk_2 \cos (\omega_e t - 2\pi/3);$$

$$ic_2(t) = -Ipk_2 \cos (\omega_e t - 4\pi/3);$$

wherein, $Ipk_2$ is a peak (magnitude) of current flowing in second balanced three phase winding set [in the units of Amps];
wherein, $\omega_e$ is the angular frequency of the second current set [in the units of radians/second], which is equal to the angular frequency of the first current set; and
wherein, t, is time [in the units of seconds].

From the trigonometric definitions, note the spatial sequence of $ia_2$, $ib_2$ and $ic_2$ is inverse of $ia_1$, $ib_1$ and $ic_1$.

The combination of the first and second sets of windings 438, 440 with currents flowing in them may result in a rotating magnetic field in the outer (radial flux) or side (axial flux) core of the stator 434. This rotating magnetic field may be in synchronism with the rotating component of, e.g., an engine, and may achieve power conversion: either in the motoring mode or generator mode.

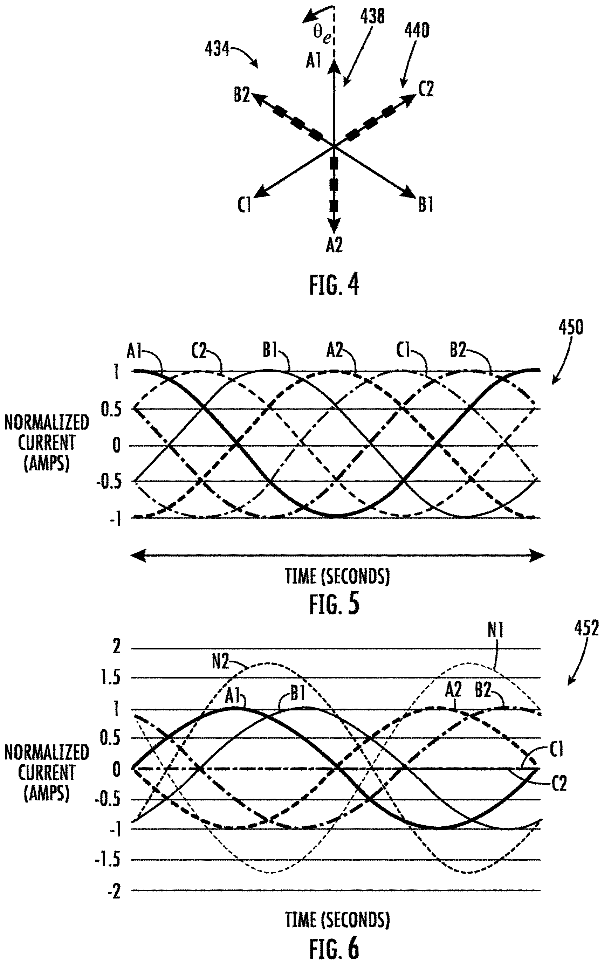

Referring now to FIG. 4, the first set of windings 438 and the second set of windings 440 are depicted schematically, along with the spatial electrical angle, $\theta_e$,

of the rotor 432. In the embodiment shown, the rotor 432 of electric machine 402 rotates in a counterclockwise circumferential direction, and a position of the rotor 432 is associated with the spatial electrical angle, $\theta_e$.

Further, referring now to FIG. 5, an exemplary graph 450 is provided depicting on a Y-axis a normalized current (i.e., actual current divided by peak current) from each of the phases of the first and second sets of windings 438, 440 over time on an X-axis. When the electric machine 402 is operated according to the spatial sequences noted above (e.g., during the normal operating condition), the second set of windings 440 is 180 degrees out of phase with the first set of windings 438. Further, when the electric machine 402 is operating according to the spatial sequences noted above during the normal operating condition, the currents flowing to and from each of the phases of the first set of windings 438 and second set of windings 440 does not exceed the peak magnitudes (1 and -1 for the normalized graph 450 depicted in FIG. 5).

However, in the event of, e.g., a failure condition of the electric machine 402, whereby one or more of the phases of the first set of windings 438, the second set of windings 440, or both is operated in a non-conducting mode (e.g., as a result of a failure), the spatial sequences described above may result in currents that exceed the peak magnitudes.

For example, referring now to FIG. 6, an exemplary graph 452 is provided depicting on a Y-axis a normalized current from each of the phases of the first and second sets of windings 438, 440 over time on an X-axis during an operating condition in which one or more of the phases is in a non-conducting condition. In the embodiment depicted in FIG. 6, phase C1 of the first set of windings 438 and phase C2 of the second set of windings 440 are in a non-conducting condition (e.g., as a result of a failure). With such configuration, the first set of windings 438 and the second set of windings 440 may each be required to be grounded through one or more neutral wires or ground wires, such that the neutral wires or ground wires may "bring back" the current being provided through the remaining phases that are operating.

As will be appreciated from the graph 452, a peak current experienced by these neutral or ground wires is higher than the peak current from the remaining phases that are operating. In particular the peak current experienced by these neutral or ground wires may be about 1.73 times that of the peak current of the remaining phases that are operating. Such a configuration may require additional, heavier duty wiring to allow the electric machine 402 to operate during such a configuration.

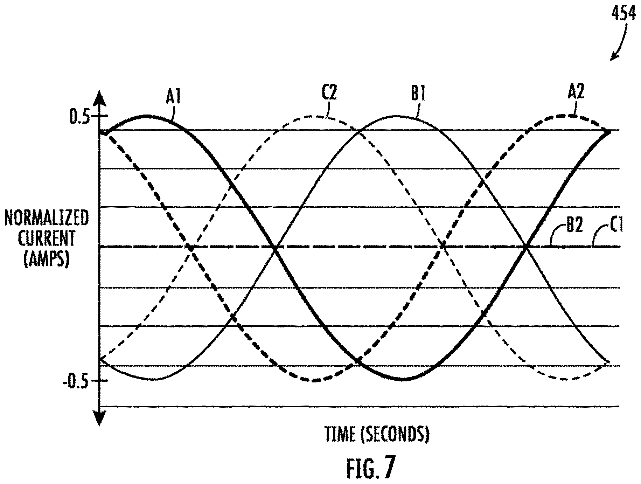

However, turning now to FIG. 7, an alternative excitation strategy in accordance with an exemplary aspect of the present disclosure is shown that may result in a net neutral current in each of the first set of windings 438 in the second set of windings 440, eliminating the need for the neutral or ground wires noted above. In particular, FIG. 7 provides an exemplary graph 454 depicting on a Y-axis normalize currents from each of the phases of the first and second sets of windings 438, 440 over time on an X-axis during an operating condition in which one or more of the phases is in a non-conducting condition. However, for the embodiment of FIG. 7, the first and second sets of windings 438, 440 are operated according to an excitation strategy in accordance with an exemplary aspect of the present disclosure.

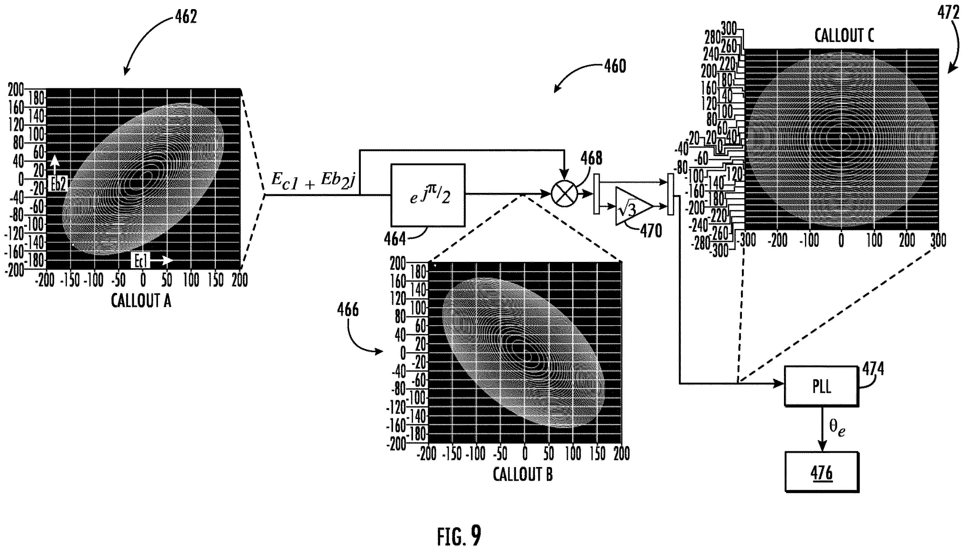

Notably, for the exemplary aspect associated with FIG. 7, phase C1 of the first set of windings 438 and phase B2 of the second set of windings 440 are in a non-conducting condition, such that no current is provided to or received from these phases. One or both of these phases may be experiencing a failure condition, or alternatively, one or both of these phases may be intentionally shut down to facilitate operations in accordance with one or more other exemplary aspects of the present disclosure (see, e.g., discussion below with reference to FIGS. 8 and 9). One or both of these phases may be shut down by opening up one or more switches associated with an AC/DC converter in electric connection with the respective phase (e.g., switches 418, 420 of the first power converter unit 410 or second power converter unit 412, respectively).

In particular, as will be appreciated from the graph 454 of FIG. 7 and the discussion herein, the first set of windings 438 is powered to provide a net zero current in the first set of windings 438 while maintaining one phase (C1 in the embodiment shown) of the first set of windings 438 in a non-conducting condition. Similarly, the second set of windings 440 is powered to provide a net zero current in the second set of windings 440 while maintaining one phase (B2 in the embodiment shown) of the second set of windings 440 in a non-conducting condition. In order to generate a torque with such a spatial sequence, the second set of windings 440 is powered 60 degrees out of phase with the first set of windings 438.

More specifically, for the embodiment shown, as briefly noted above, phase C1 of the first set of windings 438 and B2 of the second set of windings 440 are maintained in a non-conducting condition, phase A2 of the second set of windings 440 is powered in a manner to be 60 degrees out of phase with phase A1 of the first set of windings 438, and phase C2 of the second set of windings 440 is powered in a manner to be 60 degrees out of phase with phase B1 of the first set of windings 438.

It will be appreciated, however, that in other exemplary embodiments, other phases of the first set of windings 438, the second set of windings 440, or both may be maintained in a non-conducting condition. With such configuration, the remaining phases in operation may be operated in the manner described herein.

More specifically, for the first set of windings 438 during the operating condition in which one or more of the phases is in the non-conducting condition, the fundamental components of the winding functions may be:

$$Na_1(\theta_e) = N_1 \cos(\theta_e);$$

$$Nb_1(\theta_e) = N_1 \cos(\theta_e - 2\pi/3);$$

$$Nc_1(\theta_e) = N_1 \cos(\theta_e - 4\pi/3);$$

Moreover, it will be appreciated that the fundamental components of currents flowing in the first set of windings 438 when powering the first set of windings 438 to provide the net-zero current in the first set of windings 438 while maintaining one phase of the first set of windings 438 in a non-conducting condition may be defined as:

$$ia_1(t) = Ipk_1 \cos(\omega_e t);$$

$$ib_1(t) = -Ipk_1 \cos(\omega_e t);$$

and

$$ic_1(t) = 0;$$

Similarly, for the second set of windings 440 during the operating condition in which one or more of the phases is in the non-conducting condition, the fundamental components of the winding functions may be:

$$Na_2(\theta_e) = -N_2 \cos(\theta_e);$$

$$Nb_2(\theta_e) = -N_2 \cos(\theta_e - 2\pi/3);$$

$$Nc_2(\theta_e) = -N_2 \cos(\theta_e - 4\pi/3);$$

Further, it will be appreciated that the fundamental components of currents flowing in the second set of windings 440 when powering the second set of windings 440 to provide the net-zero current in the second set of windings 440 while maintaining one phase of the second set of windings 440 in a non-conducting condition may be defined as:

$$ia_2(t) = Ipk_2 \cos(\omega_e t + \pi/3);$$

$$ib_2(t) = 0;$$

$$ic_2(t) = -Ipk_2 \cos(\omega_e t + \pi/3);$$

Operating the electric machine 402 (see FIG. 3) in accordance with the above spatial sequences may allow for the electric machine 402 to be operated in a partial phase mode, without requiring a neutral or ground wiring in connection in the first set of windings 438 or the second set of windings 440. In such a manner, neither the first set of windings 438 nor the second set of windings 440 of the electric machine 402 may be coupled to a neutral or ground wire.

Notably, the term "partial phase mode" refers to an operating condition whereby one or more phases are operated in a non-conducting condition. Such may be a result of a failure of the phase(s), or may be a result of intentionally operating the phase(s) in the non-conducting condition, e.g., to determine rotor positions, as described hereinbelow. The term "full phase mode" refers to an operating condition whereby no phases of the electric machine are operated in a non-conducting condition.

Moreover, such a configuration may allow for power or torque generation using the electric machine 402 while operating in the partial phase mode using the combined effect of the active four phases of the first set of windings 438 and the second set of windings 440, generating half the amplitude of the normal operating mode.

Notably, although the spatial sequence described above is described with respect to electric machines having two sets of windings, in other exemplary embodiments, the spatial sequence may be applied to an electric machine having any other suitable number of windings (e.g., four sets of windings or more). For example, the spatial sequence described above may be applied to an electric machine with N-channels, or rather N sets of three phase windings, where N is any multiple of 2. In such a configuration, a $(3 \times N) - N$ phase operation would be provided, with $(2 \times \pi) / (3 \times N)$ phase separation between them, may produce a rotating magnetic field and one phase from each channel can be used for back EMF sensing and "sensorless" control (i.e., control without a position sensor on a component coupled to a rotor of the electric machine).

Referring now to FIG. 8, an electric machine assembly 400 in accordance with another exemplary embodiment of the present disclosure is provided. The electric machine assembly 400 of FIG. 8 may be configured in substantially the same manner as the exemplary electric machine assembly 400 described above with reference to FIGS. 3 through 7.

For example, the exemplary aspect of the electric machine assembly 400 of FIG. 8 provides a method of determining a position of a rotor 432 (e.g., a spatial electrical angle of the rotor 432) of an electric machine 402 of the electric machine assembly 400 when at least one phase of a first set of windings 438 and at least one phase of a second set of windings 440 is in a non-conducting condition, e.g., to provide zero current. In particular, the exemplary embodiment depicted in FIG. 8 includes a controller 422 and one or more sensors in electrical connection with the phase of the first set of windings 438 operated in the non-conducting condition and the phase of the second set of windings 440 operated in the non-conducting condition. The one or more sensors are configured to provide to the controller 422 data indicative of a voltage signal in the phase of the first set of windings 438 operated in the non-conducting condition and data indicative of a voltage signal in the phase of the second set of windings 440 operated in the non-conducting condition. In particular, for the embodiment depicted, the electric machine assembly 400 includes a first voltage sensor 456 configured to provide to the controller 422 data indicative of a voltage signal in the phase of the first set of windings 438 operated in the non-conducting condition, and a second voltage sensor 458 configured to provide the controller 422 data indicative of a voltage signal in the phase of the second set of windings 440 operated in the non-conducting condition.

As mentioned above, the phases may be operated in the non-conducting conditions (e.g., to provide the zero current) by opening one or more switches associated with respective AC/DC converters in electrical connection with the respective phases (e.g., switches 418, 420 of the first power converter unit 410 or second power converter unit 412, respectively; see FIG. 3).

The exemplary controller 422 depicted further includes a processing module 460 configured to receive from the one or more sensors (sensors 456, 458 for the embodiment shown) the data indicative of the voltage signals of the phase of the first set of windings 438 operated in the non-conducting condition and the voltage signal of the phase of the second set of windings 440 operated in the non-conducting condition. The processing module 460 is configured to apply one or more processing steps, discussed below, to the data received to determine the spatial electrical angle of the rotor 432 of electric machine 402. The determined spatial electrical angle may be provided to a separate controller, or another module of the controller 422 depicted to may control decisions for the electric machine 402.

Referring now to FIG. 9, operation of the processing module 460 is described in more detail. As noted, the processing module 460 receives the data indicative of the voltage signals of the phase of the first set of windings 438 operated in the non-conducting condition and the voltage signal of the phase of the second set of windings 440 operated in the non-conducting condition. More specifically, in the exemplary aspect depicted, the data indicated of the voltage signal of the phase of the first set of windings 438 is a first back EMF signal in the phase, and the data indicated of the voltage signal of the phase of the second set of windings 440 is a second back EMF signal in the phase.

The processing module 460 receives the data indicative of the first back EMF signal and the data indicative of the second back EMF signal, shown as $E_{b2}j$, where "j" is an imaginary unit. The processing module 460 may determine the position of the rotor 432 of electric machine 402 based on the received data indicative of the first back EMF signal and based on the received data indicative of the second back EMF signal.

More specifically, the processing module 460 is configured to receive vector data indicative of the first back EMF signal, shown as $E_{c1}$, and vector data indicative of the second back EMF signal, shown as $E_{b2}j$, where "j" is an imaginary unit. In such a manner, it will be appreciated that the second back EMF signal is in an imaginary unit, as is indicated by the "j" in FIG. 9. A diagram 462 of the first back EMF signal and of the second back EMF signal is provided at Callout A.

The processing module 460 is configured to shift at block 464 the vector data indicative of the second back EMF signal by 90 degrees, as is indicated in FIG. 9, my multiplying the vector data indicative of the second back EMF signal by a shifting factor, which is depicted in block 464 as using Euler's formula, with "j" being the imaginary unit. A diagram 466 of the shifted vector data is provided at Callout B.

The vector data indicative of the first back EMF signal and the vector data indicative of the second back EMF signal (shifted by 90 degrees) is joined together at block 468, and subsequently, the data is split such that the vector data indicative of the second back EMF signal may be scaled at 470 by a scaling factor, the scaling factor being equal to the square root of three. A diagram 472 of the resulting data is indicated at Callout C.

As will be appreciated, the processing described above with respect to the processing module 460 may result in balanced rotating vector data, as is shown in diagram 472. The balance rotating vector data is provided to a phase locked loop at 474. The phase locked loop 474 may determine data indicative of the rotor position (e.g., the spatial electrical angle of the rotor 432 of electric machine 402) from the processed data, and subsequently provide the data indicative of the rotor position to an electric machine control module 476. The electric machine control module 476 may be integrated into the controller 422 (see FIG. 8), or may be a stand-alone controller, or may be integrated into any other suitable controller. The electric machine control module 476 may be configured to make control decisions regarding the electric machine 402 based at least in part of the received data indicative of the rotor position (e.g., the spatial electrical angle of the rotor 432 of electric machine 402). Controlling the electric machine 402 using this data may result in more efficient operation of the electric machine 402.

Notably, using the above noted methodology for determining the rotor position of the electric machine 402 may allow for omission of one or more components that may otherwise be used to determine the rotor 432 position. For example, employing the above methodology may allow for omission of a resolver or encoder located on a shaft or spool of an engine driving the rotor 432 of the electric machine 402. Such may result in a shorter and/or lighter engine.

Further, utilizing the above methodology may allow for more efficient estimation of rotor position (e.g., the spatial electrical angle of the rotor 432 of electric machine 402) during low speed operations of the electric machine 402 (e.g., when the rotor 432 of electric machine 402 is operating at a rotational speed of less than 1,200 revolutions per minute, such as less than 1,000 revolutions per minute). For example, in certain exemplary embodiments, the above methodology may allow for more efficient estimation of rotor position when the rotor 432 of electric machine 402 is operating at a rotational speed less than or equal to 15% of a maximum rated speed of the electric machine, such as less than or equal to 10% of the maximum rated speed of the electric machine. Other rotor position estimation algorithms can be less accurate at these low speeds.

In certain exemplary embodiments, when the phase of the first set of windings 438 is in the non-conducting condition and the phase of the second set of windings 440 is in the non-conducting condition, the electric machine 402 may be operated according to the methodology described above with reference to, e.g., FIGS. 3 through 7. Such may allow for utilizing the methodology of FIGS. 8 and 9 without requiring robust (or any) neutral or ground wires.

However, in other exemplary embodiments the electric machine 402 may be operated according to any other suitable methodology/spatial sequence when utilizing the methodology described above with reference to FIGS. 8 and 9 to determine a position of the rotor 432 of the electric machine 402.

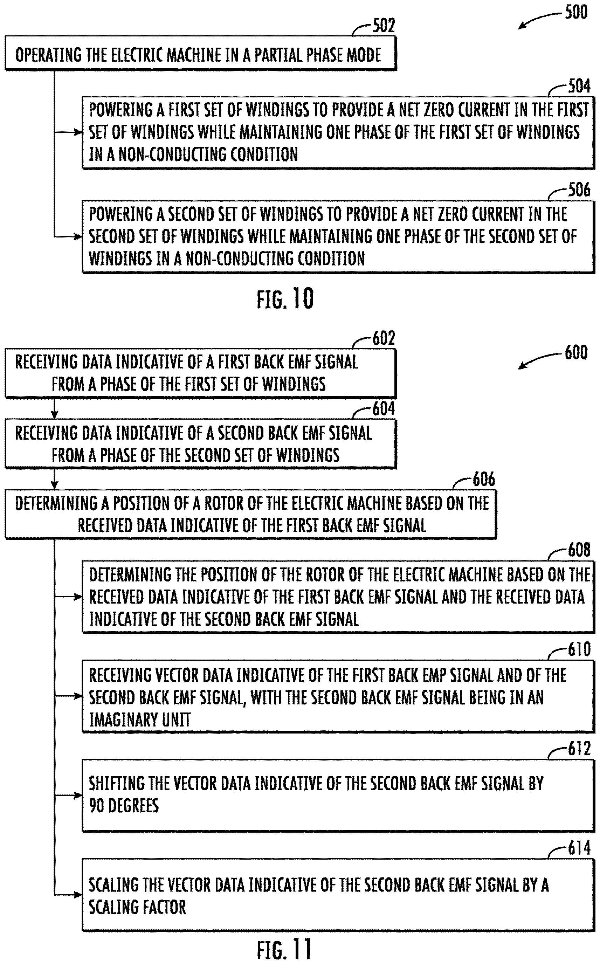

Referring now briefly to FIG. 10, a method 500 of operating an electric machine assembly in accordance with an aspect of the present disclosure is provided. The electric machine assembly may be configured in a similar manner as one or more of the exemplary electric machine assemblies described above. For example, the electric machine assembly may include an electric machine having a first set of windings and a second set of windings.

The method 500 includes at (502) operating the electric machine in a partial phase mode, wherein operating the electric machine in the partial phase mode includes at (504) powering a first set of windings to provide a net zero current in the first set of windings while maintaining one phase of the first set of windings in a non-conducting condition; and at (506) powering a second set of windings to provide a net zero current in the second set of windings while maintaining one phase of the second set of windings in a non-conducting condition.

Referring now briefly to FIG. 11, a method 600 of operating an electric machine assembly in accordance with another aspect of the present disclosure is provided. The electric machine assembly may be configured in a similar manner as one or more of the exemplary electric machine assemblies described above. For example, the electric machine assembly may include an electric machine having a first set of windings and a second set of windings.

The method 600 includes at (602) receiving data indicative of a first back EMF signal from a phase of the first set of windings; and at (604) receiving data indicative of a second back EMF signal from a phase of the second set of windings. The method 600 further includes at (606) determining a position of a rotor of the electric machine based on the received data indicative of the first back EMF signal. More specifically, determining the position of the rotor of the electric machine at (606) further includes at (608) determining the position of the rotor of the electric machine based on the received data indicative of the first back EMF signal and the received data indicative of the second back EMF signal.

In particular, for the exemplary aspect depicted, determining the position of the rotor of the electric machine at (606) further includes at (610) receiving vector data indicative of the first back EMP signal and of the second back EMF signal, with the second back EMF signal being in an imaginary unit; at (612) shifting the vector data indicative of the second back EMF signal by 90 degrees; and at (614) scaling the vector data indicative of the second back EMF signal by a scaling factor.

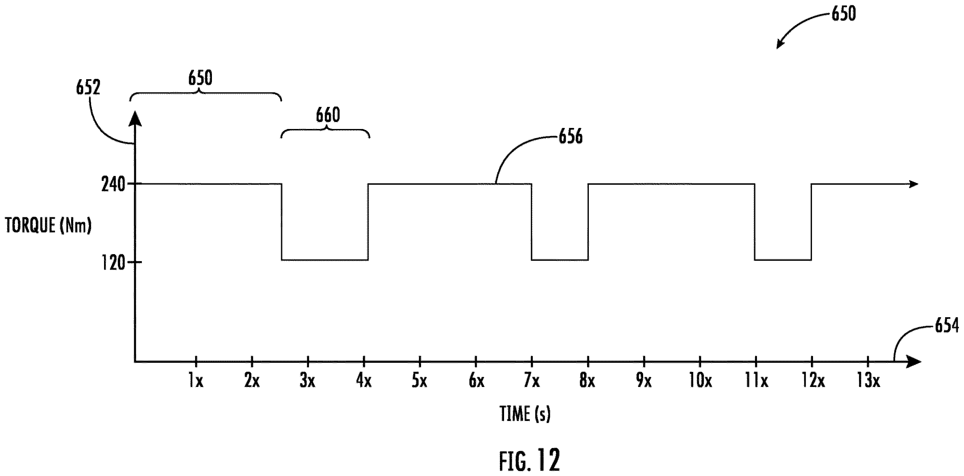

Briefly, it will further be appreciated, that in certain exemplary aspects of the present disclosure, an electric machine may be toggled between a full phase operating mode and a partial phase operating mode to allow for periodic determination of a rotor position of the electric machine with a minimum amount of torque output reduction. For example, referring briefly to FIG. 12, one such control scheme is depicted graphically. In particular, FIG. 12 shows a graph 650 with torque in Newton-meters (Nm) on a Y-axis 652 and time in seconds (s) on an X-axis 654. The electric machine torque output is depicted using line 656. As will be appreciated, the electric machine is operated in a full phase operating mode for a first duration 658 and in a partial phase operating mode for a second duration 660. The full phase operating mode may refer to the operation described above with reference, e.g., to FIG. 5. The partial phase operating mode may refer to the operation described above with reference, e.g., to FIG. 7. Notably, operating in the partial phase operating mode may allow for determining the rotor position, e.g., according to the method 600 and/or the description above associated with FIGS. 8 and 9.

In the exemplary operating scheme depicted in FIG. 12, operating in the partial phase operating mode may account for between 5% and 75% of a total operating time (with the electric machine being operated in the full phase operating mode for the remainder of the time), such as at least 10%, at least 15%, at least 20%, or at least 25%, such as up to 65%, up to 50%, up to 40%, or up to 30% of the total operating time (with the electric machine being operated in the full phase operating mode for the remainder of the time).

In particular, for the exemplary aspect of FIG. 12, operating in the partial phase operating mode accounts for 25% of the total operating time, and operating in the full phase operating mode accounts for 75% of the total operating. With such a configuration, a net power output by be approximately 87.5% of the power output in when operating in the full phase operating mode, resulting in a relatively minor loss in torque.

It will be appreciated, however, that the percentages discussed above with reference to FIG. 12 are by way of example only, and the actual percentages will depend on a variety of factors, including an inertia of the rotating components, damping needs, etc.

Operating the electric machine in accordance with such an exemplary aspect may allow for the electric machine to generate a desired amount of torque while also allowing for a position of the rotor to be determined. Notably, in at least certain implementations, the electric machine may be coupled to a rotary component with a relatively high amount of rotational inertia (e.g., a spool of a gas turbine engine). With such a configuration, the rotor position of the electric machine may be extrapolated out with a relatively high degree of confidence when operating the electric machine in the full phase operating mode based on information gathered while operating the electric machine during the partial phase operating mode.

Referring now to FIG. 13, FIG. 13 provides an example computing system 700 according to example embodiments of the present disclosure. The computing devices or elements described herein, such as controller 422 and module 476, may include various components and perform various functions of the computing system 700 described below, for example.

As shown in FIG. 13, the computing system 700 can include one or more computing device(s) 702. The computing device(s) 702 can include one or more processor(s) 702A and one or more memory device(s) 702B. The one or more processor(s) 702A can include any suitable processing device, such as a microprocessor, microcontroller, integrated circuit, logic device, and/or other suitable processing device. The one or more memory device(s) 702B can include one or more computer-executable or computer-readable media, including, but not limited to, non-transitory computer-readable media, RAM, ROM, hard drives, flash drives, and/or other memory devices.

The one or more memory device(s) 702B can store information accessible by the one or more processor(s) 702A, including computer-readable instructions 702C that can be executed by the one or more processor(s) 702A. The instructions 702C can be any set of instructions that when executed by the one or more processor(s) 702A, cause the one or more processor(s) 702A to perform operations. In some embodiments, the instructions 702C can be executed by the one or more processor(s) 702A to cause the one or more processor(s) 702A to perform operations, such as any of the operations and functions for which the computing system 700 and/or the computing device(s) 702 are configured, such as controlling operation of electrical power systems. The instructions 702C can be software written in any suitable programming language or can be implemented in hardware. Additionally, and/or alternatively, the instructions 702C can be executed in logically and/or virtually separate threads on processor(s) 702A. The memory device(s) 702B can further store data 702D that can be accessed by the processor(s) 702A. For example, the data 702D can include models, lookup tables, databases, etc.

The computing device(s) 702 can also include a network interface 702E used to communicate, for example, with the other components of system 700 (e.g., via a communication network). The network interface 702E can include any suitable components for interfacing with one or more network(s), including for example, transmitters, receivers, ports, controllers, antennas, and/or other suitable components. One or more devices can be configured to receive one or more commands from the computing device(s) 702 or provide one or more commands to the computing device(s) 702.

The technology discussed herein makes reference to computer-based systems and actions taken by and information sent to and from computer-based systems. One of ordinary skill in the art will recognize that the inherent flexibility of computer-based systems allows for a great variety of possible configurations, combinations, and divisions of tasks and functionality between and among components. For instance, processes discussed herein can be implemented using a single computing device or multiple computing devices working in combination. Databases, memory, instructions, and applications can be implemented on a single system or distributed across multiple systems. Distributed components can operate sequentially or in parallel.

Further aspects are provided by the subject matter of the following clauses:

A method for operating an electric machine assembly, the electric machine assembly having an electric machine comprising a first set of windings and a second set of windings, the method comprising: operating the electric machine in a partial phase mode, wherein operating the electric machine in the partial phase mode comprises: powering a first set of windings to provide a net zero current in the first set of windings while maintaining one phase of the first set of windings in a non-conducting condition; and powering a second set of windings to provide a net zero current in the second set of windings while maintaining one phase of the second set of windings in a non-conducting condition.

The method of any preceding clause, wherein the first set of windings includes phases A1, B1, and C1, wherein the second set of windings includes phases A2, B2, and C2, wherein powering the first set of windings comprises powering phases A1 and B1 180 degrees out of phase, and wherein powering the second set of windings comprises powering A2 and C2 180 degrees out of phase, with A2 being 60 degrees out of phase with A1.

The method of any preceding clause, wherein powering the first set of windings comprises powering the first set of windings according to the following spatial sequence:

$$Na_1(\theta_e) = N_1 \cos(\theta_e);$$

$$Nb_1(\theta_e) = N_1 \cos(\theta_e - 2\pi/3);$$

and

$$Nc_1(\theta_e) = N_1 \cos(\theta_e - 4\pi/3);$$

wherein powering the second set of windings comprises powering the second set of windings according to the following spatial sequence:

$$Na_2(\theta_e) = -N_2 \cos(\theta_e);$$

$$Nb_2(\theta_e) = -N_2 \cos(\theta_e - 2\pi/3);$$

and

$$Nc_2(\theta_e) = -N_2 \cos(\theta_e - 4\pi/3);$$

wherein $Na_1$, $Nb_1$, $Nc_1$, $Na_2$, $Nb_2$, and $Nc_2$ are the winding functions of the phases A1, B1, and C1 of the first set of windings and of the phases A2, B2, and C2 of the second set of windings; wherein $N_1$ and $N_2$ are the peak winding functions for the first and second sets of windings, respectively; and wherein $\theta_e$ is the spatial electrical angle for the first and second sets of windings.

The method of any preceding clause, wherein the fundamental components of currents through the phases A1, B1, and C1 of the first set of windings and of the phases A2, B2, and C2 of the second set of windings is as follows:

$$ia_1(t) = Ipk_1 \cos(\omega_e t);$$

$$ib_1(t) = -Ipk_1 \cos(\omega_e t);$$

$$ic_1(t) = 0;$$

$$ia_2(t) = Ipk_2 \cos(\omega_e t + \pi/3);$$

$$ib_2(t) = 0;$$

and

$$ic_2(t) = -Ipk_2 \cos(\omega_e t + \pi/3);$$

wherein $ia_1(t)$, $ib_1(t)$, $ic_1(t)$, $ia_2(t)$, $ib_2(t)$, and $ic_2(t)$ are the currents through phases A1, B1, and C1 of the first set of windings and of the phases A2, B2, and C2 of the second set of windings at a given time, t; wherein, $Ipk_1$ and $Ipk_2$ are a peak of current flowing in first and second sets of windings, respectively, in the units of Amps; wherein, $\omega_e$ is an angular frequency of a first current set and of a second current set in the units of radians/second; and wherein, t is time in units of seconds.

The method of any preceding clause, wherein the electric machine is a synchronous electric machine, wherein the first set of windings is a three phase set of windings, and wherein the second set of windings is a three phase set of windings.

The method of any preceding clause, wherein neither the first set of windings nor the second set of windings of the electric machine is coupled to a neutral line.

The method of any preceding clause, wherein operating the electric machine in the partial phase mode further comprises: receiving data indicative of a first back EMF signal from the one phase of the first set of windings; receiving data indicative of a second back EMF signal from the one phase of the second set of windings; and determining data indicative of a position of a rotor of the electric machine based on the data indicative of the first back EMF signal and based on the data indicative of a second back EMF signal.

The method of any preceding clause, wherein determining data indicative of the position of the rotor further comprises: receiving vector data indicative of the first back EMF signal and the second back EMF signal, with the second back EMF signal being in an imaginary unit; shifting the vector data indicative of the second back EMF signal by 90 degrees; and scaling the vector data indicative of the second back EMF signal by a scaling factor.

The method of any preceding clause, wherein receiving data indicative of the first back EMF signal comprises receiving data indicative of the first back EMF signal from a first voltage sensor, and wherein receiving data indicative of the second back EMF signal comprises receiving data indicative of the second back EMF signal from a second voltage sensor.

The method of any preceding clause, wherein receiving data indicative of the first back EMF signal comprises receiving data indicative of the first back EMF signal while operating the electric machine at a rotational speed of less than 1,200 revolutions per minute.

An electric machine assembly comprising: an electric machine comprising a first set of windings and a second set of windings, wherein the first set of windings includes phases A1, B1, and C 1, and wherein the second set of windings includes phases A2, B2, and C2; and a controller in operative communication with the electric machine comprising one or more processors and memory, the memory storing instructions that when executed by the one or more processors cause the electric machine assembly to power the first set of windings and the second set of windings to provide a net zero current in the first set of windings and a net zero current in the second set of windings in response to receiving data indicative of a failure of at least one phase in the first set of windings or in the second set of windings.

The electric machine assembly of any preceding clause, wherein in response to receiving data indicative of the failure of the at least one phase in the first set of windings or in the second set of windings, the controller is configured to power phases A1 and B1 180 degrees out of phase, to power A2 and C2 180 degrees out of phase, with A2 being 60 degrees out of phase with A1.

The electric machine assembly of any preceding clause, wherein in response to receiving data indicative of the failure of the at least one phase in the first set of windings or in the second set of windings, the controller is configured to power the first set of windings and the second set of windings according to the following spatial sequence:

$$Na_1(\theta_e) = N_1 \cos(\theta_e);$$

$$Nb_1(\theta_e) = N_1 \cos(\theta_e - 2\pi/3);$$

$$Nc_1(\theta_e) = N_1 \cos(\theta_e - 4\pi/3);$$

$$Na_2(\theta_e) = -N_2 \cos(\theta_e);$$

$$Nb_2(\theta_e) = -N_2 \cos(\theta_e - 2\pi/3);$$

and

$$Nc_2(\theta_e) = -N_2 \cos(\theta_e - 4\pi/3);$$

wherein $Na_1$, $Nb_1$, $Nc_1$, $Na_2$, $Nb_2$, and $Nc_2$ are the winding functions of the phases A1, B1, and C1 of the first set of windings and of the phases A2, B2, and C2 of the second set of windings; wherein $N_1$ and $N_2$ are the peak winding functions for the first and second sets of windings, respectively; and wherein $\theta_e$ is the spatial electrical angle for the first and second sets of windings.

The electric machine assembly of any preceding clause, wherein the electric machine is a synchronous electric machine, wherein the first set of windings is a three phase set of windings, and wherein the second set of windings is a three phase set of windings.

The electric machine assembly of any preceding clause, wherein neither the first set of windings nor the second set of windings is coupled to a neutral or ground line.

A method for operating an electric machine assembly, the electric machine assembly having an electric machine comprising a first set of windings and a second set of windings, the method comprising: receiving data indicative of a first back EMF signal from a phase of the first set of windings; and determining data indicative of a position of a rotor of the electric machine based on the received data indicative of the first back EMF signal.

The method of any preceding clause, further comprising: receiving data indicative of a second back EMF signal from a phase of the second set of windings, wherein determining the data indicative of the position of the rotor of the electric machine further comprises determining data indicative of the position of the rotor of the electric machine based on the received data indicative of first back EMF signal and the second back EMF signal.

The method of any preceding clause, wherein the phase of the first set of windings is in a non-conducting condition, and wherein the phase of the second set of windings is also in a non-conducting condition.

The method of any preceding clause, wherein determining the data indicative of the position of the rotor further comprises: receiving vector data indicative of the first back EMP signal and of the second back EMF signal, with the second back EMF signal being in an imaginary unit; shifting the vector data indicative of the second back EMF signal by 90 degrees; and scaling the vector data indicative of the second back EMF signal by a scaling factor.

The method of any preceding clause, wherein receiving the data indicative of the first back EMF signal comprises receiving the data indicative of first back EMF signal from a first voltage sensor, and wherein receiving data indicative of the second back EMF signal comprises receiving the data indicative of the second back EMF signal from a second voltage sensor.

The method of any preceding clause, comprising: operating the electric machine in a partial phase mode, wherein operating the electric machine in the partial phase mode comprises the steps of receiving data indicative of the first back EMF signal from the phase of the first set of windings, and determining data indicative of the position of a rotor of the electric machine based on the received data indicative of the first back EMF signal; and operating the electric machine in a full phase mode subsequent to operating the electric machine in the partial phase mode.

The method of any preceding clause, wherein operating the electric machine in the full phase mode subsequent to operating the electric machine in the partial phase mode comprises determining a position of a rotor of the electric machine based on data received while operating the electric machine in the partial phase mode.

The method of any preceding clause, wherein determining the position of the rotor of the electric machine based on data received while operating the electric machine in the partial phase mode comprises extrapolating data indicative of the position of the rotor while operating the electric machine in the full phase mode.

The method of any preceding clause, wherein operating the electric machine in the partial phase mode operating comprises operating the electric machine in the partial phase mode for between 5% and 75% of a total operating time.

The method of any preceding clause, wherein operating the electric machine in the partial phase mode for between 5% and 75% of the total operating time comprises operating the electric machine in the full phase operating mode for a remainder of the total operating time.

The method of any preceding clause, wherein operating the electric machine in the partial phase mode for between 5% and 75% of the total operating time comprises operating the electric machine in the partial phase mode for between 15% and 50% of the total operating time.

This written description uses examples to disclose the present disclosure, including the best mode, and also to enable any person skilled in the art to practice the disclosure, including making and using any devices or systems and performing any incorporated methods. The patentable scope of the disclosure is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

**Claims**

1. A method for operating an electric machine assembly, the electric machine assembly having an electric machine comprising a first set of windings and a second set of windings, the method comprising:
   operating the electric machine in a partial phase mode, wherein operating the electric machine in the partial phase mode comprises:

   powering a first set of windings to provide a net zero current in the first set of windings while maintaining one phase of the first set of windings in a non-conducting condition; and
   powering a second set of windings to provide a net zero current in the second set of windings while maintaining one phase of the second set of windings in a non-conducting condition.

2. The method of claim 1, wherein the first set of windings includes phases A1, B1, and C1, wherein the second set of windings includes phases A2, B2, and C2, wherein powering the first set of windings comprises powering phases A1 and B1 180 degrees out of phase, and wherein powering the second set of windings comprises powering A2 and C2 180 degrees out of phase, with A2 being 60 degrees out of phase with A1.

3. The method of claim 2, wherein powering the first set of windings comprises powering the first set of windings according to the following spatial sequence:

$$Na_1(\theta_e) = N_1 \cos(\theta_e);$$

$$Nb_1(\theta_e) = N_1 \cos(\theta_e - 2\pi/3);$$

and

$$Nc_1(\theta_e) = N_1 \cos(\theta_e - 4\pi/3);$$

wherein powering the second set of windings comprises powering the second set of windings according to the following spatial sequence:

$$Na_2(\theta_e) = -N_2 \cos(\theta_e);$$

$$Nb_2(\theta_e) = -N_2 \cos(\theta_e - 2\pi/3);$$

and

$$Nc_2(\theta_e) = -N_2 \cos(\theta_e - 4\pi/3);$$

wherein $Na_1$, $Nb_1$, $Nc_1$, $Na_2$, $Nb_2$, and $Nc_2$ are the winding functions of the phases A1, B1, and C1 of the first set of windings and of the phases A2, B2, and C2 of the second set of windings; wherein $N_1$ and $N_2$ are the peak winding functions for the first and second sets of windings, respectively; and wherein $\theta_e$ is the spatial electrical angle for the first and second sets of windings.

4. The method of claim 3, wherein the fundamental components of currents through the phases A1, B1, and C1 of the first set of windings and of the phases A2, B2, and C2 of the second set of windings is as follows:

$$ia_1(t) = Ipk_1 \cos(\omega_e t);$$

$$ib_1(t) = -Ipk_1 \cos(\omega_e t);$$

$$ic_1(t) = 0;$$

$$ia_2(t) = Ipk_2 \cos(\omega_e t + \pi/3);$$

$$ib_2(t) = 0;$$

and

$$ic_2(t) = -Ipk_2 \cos(\omega_e t + \pi/3);$$

wherein $ia_1(t)$, $ib_1(t)$, $ic_1(t)$, $ia_2(t)$, $ib_2(t)$, and $ic_2(t)$ are the currents through phases A1, B1, and C1 of the first set of windings and of the phases A2, B2, and C2 of the second set of windings at a given time, t;

wherein, $Ipk_1$ and $Ipk_2$ are a peak of current flowing in first and second sets of windings, respectively, in the units of Amps;

wherein, $\omega_e$ is an angular frequency of a first current set and of a second current set in the units of radians/second; and

wherein, t is time in units of seconds.

5. The method of any preceding claim, wherein the electric machine is a synchronous electric machine, wherein the first set of windings is a three phase set of windings, and wherein the second set of windings is a three phase set of windings.

6. The method of any preceding claim, wherein neither the first set of windings nor the second set of windings of the electric machine is coupled to a neutral line.

7. The method of any preceding claim, wherein operating the electric machine in the partial phase mode further comprises:

receiving data indicative of a first back EMF signal from the one phase of the first set of windings;
receiving data indicative of a second back EMF signal from the one phase of the second set of windings; and
determining data indicative of a position of a rotor of the electric machine based on the data indicative of the first back EMF signal and based on the data indicative of a second back EMF signal.

8. The method of claim 7, wherein determining data indicative of the position of the rotor further comprises:

receiving vector data indicative of the first back EMF signal and the second back EMF signal, with the second back EMF signal being in an imaginary unit;
shifting the vector data indicative of the second back EMF signal by 90 degrees; and
scaling the vector data indicative of the second back EMF signal by a scaling factor.

9. The method of claim 7 or 8, wherein receiving data indicative of the first back EMF signal comprises receiving data indicative of the first back EMF signal from a first voltage sensor, and wherein receiving data indicative of the second back EMF signal comprises receiving data indicative of the second back EMF signal from a second voltage sensor.

10. The method of claim 9, wherein receiving data indicative of the first back EMF signal comprises receiving data indicative of the first back EMF signal while operating the electric machine at a rotational speed of less than 1,200 revolutions per minute.

11. An electric machine assembly comprising:

an electric machine comprising a first set of windings and a second set of windings, wherein the first set of windings includes phases A1, B1, and C1, and wherein the second set of windings includes phases A2, B2, and C2; and
a controller in operative communication with the electric machine comprising one or more processors and memory, the memory storing instructions that when executed by the one or more processors cause the electric machine assembly to power the first set of windings and the second set of windings to provide a net zero current in the first set of windings and a net zero current in the second set of windings in response to receiving data indicative of a failure of at least one phase in the first set of windings or in the second set of windings.

12. The electric machine assembly of claim 11, wherein in response to receiving data indicative of the failure of the at least one phase in the first set of windings or in the second set of windings, the controller is configured to power phases A1 and B1 180 degrees out of phase, to power A2 and C2 180 degrees out of phase, with A2 being 60 degrees out of phase with A1.

13. The electric machine assembly of claim 11 or 12, wherein in response to receiving data indicative of the failure of the at least one phase in the first set of windings or in the second set of windings, the controller is configured to power the first set of windings and the second set of windings according to the following spatial sequence:

$$Na_1(\theta_e) = N_1 \cos(\theta_e);$$

$$Nb_1(\theta_e) = N_1 \cos(\theta_e - 2\pi/3);$$

$$Nc_1(\theta_e) = N_1 \cos(\theta_e - 4\pi/3);$$

$$Na_2(\theta_e) = -N_2 \cos (\theta_e);$$

$$Nb_2(\theta_e) = -N_2 \cos (\theta_e - 2\pi/3);$$

and

$$Nc_2(\theta_e) = -N_2 \cos (\theta_e - 4\pi/3);$$

wherein $Na_1$, $Nb_1$, $Nc_1$, $Na_2$, $Nb_2$, and $Nc_2$ are the winding functions of the phases A1, B1, and C1 of the first set of windings and of the phases A2, B2, and C2 of the second set of windings; wherein $N_1$ and $N_2$ are the peak winding functions for the first and second sets of windings, respectively; and wherein $\theta_e$ is the spatial electrical angle for the first and second sets of windings.

14. The electric machine assembly of any of claims 11 to 13, wherein the electric machine is a synchronous electric machine, wherein the first set of windings is a three phase set of windings, and wherein the second set of windings is a three phase set of windings.

15. A method for operating an electric machine assembly, the electric machine assembly having an electric machine comprising a first set of windings and a second set of windings, the method comprising:

receiving data indicative of a first back EMF signal from a phase of the first set of windings; and determining data indicative of a position of a rotor of the electric machine based on the received data indicative of the first back EMF signal.

FIG. 1

FIG. 2

EP 4 529 017 A1

FIG. 3

EP 4 529 017 A1

FIG. 4

FIG. 5

FIG. 6

FIG. 7

FIG. 8

FIG. 9

```
                                                    ┌─502                        ┌─500
┌────────────────────────────────────────────────┐
│ OPERATING THE ELECTRIC MACHINE IN A PARTIAL PHASE MODE │
└────────────────────────────────────────────────┘
                                                          ┌─504
        ┌──────────────────────────────────────────────────────────────────┐
        │ POWERING A FIRST SET OF WINDINGS TO PROVIDE A NET ZERO CURRENT IN THE FIRST │
        │ SET OF WINDINGS WHILE MAINTAINING ONE PHASE OF THE FIRST SET OF WINDINGS │
        │ IN A NON-CONDUCTING CONDITION │
        └──────────────────────────────────────────────────────────────────┘
                                                          ┌─506
        ┌──────────────────────────────────────────────────────────────────┐
        │ POWERING A SECOND SET OF WINDINGS TO PROVIDE A NET ZERO CURRENT IN THE │
        │ SECOND SET OF WINDINGS WHILE MAINTAINING ONE PHASE OF THE SECOND SET OF │
        │ WINDINGS IN A NON-CONDUCTING CONDITION │
        └──────────────────────────────────────────────────────────────────┘
```

FIG. 10

```
                                            ┌─602                    ┌─600
┌──────────────────────────────────────────────┐
│ RECEIVING DATA INDICATIVE OF A FIRST BACK EMF SIGNAL │
│ FROM A PHASE OF THE FIRST SET OF WINDINGS │
└──────────────────────────────────────────────┘
                                            ┌─604
┌──────────────────────────────────────────────┐
│ RECEIVING DATA INDICATIVE OF A SECOND BACK EMF SIGNAL │
│ FROM A PHASE OF THE SECOND SET OF WINDINGS │
└──────────────────────────────────────────────┘
                                               ┌─606
┌─────────────────────────────────────────────────┐
│ DETERMINING A POSITION OF A ROTOR OF THE ELECTRIC MACHINE BASED ON THE │
│ RECEIVED DATA INDICATIVE OF THE FIRST BACK EMF SIGNAL │
└─────────────────────────────────────────────────┘
                                                          ┌─608
        ┌──────────────────────────────────────────────────────────────────┐
        │ DETERMINING THE POSITION OF THE ROTOR OF THE ELECTRIC MACHINE BASED ON THE │
        │ RECEIVED DATA INDICATIVE OF THE FIRST BACK EMF SIGNAL AND THE RECEIVED DATA │
        │ INDICATIVE OF THE SECOND BACK EMF SIGNAL │
        └──────────────────────────────────────────────────────────────────┘
                                                          ┌─610
        ┌──────────────────────────────────────────────────────────────────┐
        │ RECEIVING VECTOR DATA INDICATIVE OF THE FIRST BACK EMP SIGNAL AND OF THE │
        │ SECOND BACK EMF SIGNAL, WITH THE SECOND BACK EMF SIGNAL BEING IN AN │
        │ IMAGINARY UNIT │
        └──────────────────────────────────────────────────────────────────┘
                                                          ┌─612
        ┌──────────────────────────────────────────────────────────────────┐
        │ SHIFTING THE VECTOR DATA INDICATIVE OF THE SECOND BACK EMF SIGNAL BY │
        │ 90 DEGREES │
        └──────────────────────────────────────────────────────────────────┘
                                                          ┌─614
        ┌──────────────────────────────────────────────────────────────────┐
        │ SCALING THE VECTOR DATA INDICATIVE OF THE SECOND BACK EMF SIGNAL BY A │
        │ SCALING FACTOR │
        └──────────────────────────────────────────────────────────────────┘
```

FIG. 11

FIG. 12

EP 4 529 017 A1

700

702

702A

702B

702C

702D

702E

FIG. 13

Europäisches
Patentamt

European
Patent Office

Office européen
des brevets

# EUROPEAN SEARCH REPORT

**Application Number**

EP 24 19 4925

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/352835 A1 (RICHARDS BRYN GEOFFREY [GB]) 3 November 2022 (2022-11-03) | 15 | INV. H02P25/22 |
| Y | * the whole document * | 1-14 | H02P29/028 |
| Y | PAPINI LUCA ET AL: "A High-Speed Permanent-Magnet Machine for Fault-Tolerant Drivetrains", IEEE TRANSACTIONS ON INDUSTRIAL ELECTRONICS, IEEE SERVICE CENTER, PISCATAWAY, NJ, USA, vol. 61, no. 6, 1 June 2014 (2014-06-01), pages 3071-3080, XP011535003, ISSN: 0278-0046, DOI: 10.1109/TIE.2013.2282604 [retrieved on 2013-12-20] * the whole document * | 1-14 | |
| Y | WELCHKO B A ET AL: "Short-circuit fault mitigation methods for interior PM synchronous machine drives using six-leg inverters", POWER ELECTRONICS SPECIALISTS CONFERENCE, 2004. PESC 04. 2004 IEEE 35TH ANNUAL, AACHEN, GERMANY 20-25 JUNE 2004, PISCATAWAY, NJ, USA,IEEE, US, vol. 3, 20 June 2004 (2004-06-20), pages 2133-2139, XP010739601, DOI: 10.1109/PESC.2004.1355448 ISBN: 978-0-7803-8399-9 * the whole document * | 1-14 | |

**TECHNICAL FIELDS SEARCHED (IPC)**

H02P

-/--

The present search report has been drawn up for all claims

| Place of search | Date of completion of the search | Examiner |
|---|---|---|
| Munich | 8 January 2025 | Fraïssé, Stéphane |

Europäisches
Patentamt

European
Patent Office

Office européen
des brevets

# EUROPEAN SEARCH REPORT

Application Number

EP 24 19 4925

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WELCHKO B A ET AL: "Magnet flux nulling control of interior PM machine drives for improved response to short-circuit faults", INDUSTRY APPLICATIONS CONFERENCE, 2004. 39TH IAS ANNUAL MEETING. CONFE RENCE RECORD OF THE 2004 IEEE SEATTLE, WA, USA 3-7 OCT. 2004, PISCATAWAY, NJ, USA,IEEE, vol. 1, 3 October 2004 (2004-10-03), pages 261-267, XP010735225, DOI: 10.1109/IAS.2004.1348419 ISBN: 978-0-7803-8486-6 * the whole document * ----- | 1-14 | |
| | | | TECHNICAL FIELDS SEARCHED (IPC) |

The present search report has been drawn up for all claims

| Place of search | Date of completion of the search | Examiner |
|---|---|---|
| Munich | 8 January 2025 | Fraïssé, Stéphane |

EPO FORM 1503 03.82 (P04C01)

## ANNEX TO THE EUROPEAN SEARCH REPORT
## ON EUROPEAN PATENT APPLICATION NO.

EP 24 19 4925

This annex lists the patent family members relating to the patent documents cited in the above-mentioned European search report.
The members are as contained in the European Patent Office EDP file on
The European Patent Office is in no way liable for these particulars which are merely given for the purpose of information.

08-01-2025

| Patent document cited in search report | Publication date | Patent family member(s) | | Publication date |
|---|---|---|---|---|
| US 2022352835 A1 | 03-11-2022 | CN | 115088180 A | 20-09-2022 |
| | | GB | 2588119 A | 21-04-2021 |
| | | US | 2022352835 A1 | 03-11-2022 |
| | | WO | 2021069479 A1 | 15-04-2021 |

EPO FORM P0459

For more details about this annex : see Official Journal of the European Patent Office, No. 12/82

**EP 4 529 017 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202311064263